# EUROPÄISCHE PATENTSCHRIFT

(11) **EP 2 093 433 B1**
(45) Veröffentlichungstag und Bekanntmachung des Hinweises auf die Patenterteilung: **23.09.2015**
(21) Anmeldenummer: 09153301.8
(22) Anmeldetag: 20.02.2009
(51) Int. Cl.: F16B 13/14, F16B 5/01, F16B 12/04, F16B 12/24, F16B 12/14

(54) **Verfahren zum Verbinden eines Befestigungselements mit einem Werkstück**
Method for connecting an attachment element to a workpiece
Procédé de liaison d'un élément de fixation et d'une pièce usinée

(30) Priorität: 25.02.2008 DE 102008010856
(43) Veröffentlichungstag der Anmeldung: 26.08.2009
(73) Patentinhaber: Homag Holzbearbeitungssysteme AG, 72296 Schopfloch (DE)
(72) Erfinder: Sturm, Gotthilf, 72293, Glatten (DE); Schmid, Johannes, 72181 Starzach (DE)
(74) Vertreter: Hoffmann Eitle

(56) Entgegenhaltungen:
- WO-A-2008/046411
- WO-A-2009/003459
- DE-A1- 10 152 908
- DE-U1- 29 721 119
- US-A- 3 716 092

## Beschreibung

Die Erfindung betrifft ein Verfahren zum Verbinden eines Befestigungselements mit einem Werkstück, insbesondere mit einer Leichtbauplatte.

### Technisches Gebiet

Leichtbauplatten, so wie sie üblicherweise im Bereich der Möbelherstellung oder im Bereich der Türherstellung verwendet werden, bestehen typischerweise aus zwei parallel zueinander angeordneten relativ dünnen Decken, welche über Abstandselemente miteinander verbunden sind. Der zwischen den beiden Decken entstehende Zwischenraum ist üblicherweise mit einem Füllmaterial ausgefüllt, das häufig Wellpappe oder ein anderes Kartonmaterial ist. Hierbei können auch je nach Stärke der Leichtbauplatten eine oder mehrere Zwischendecken vorgesehen sein. In einer anderen typischen Ausbildung ist der Zwischenraum zwischen den Decken mit einem Material geringerer Dichte vorgesehen. Die so ausgebildeten Leichtbauplatten haben typischerweise eine Stärke von 15 bis 100 mm, wobei die jeweiligen Decken nur eine Stärke von jeweils 0,5mm bis 8 mm aufweisen.

Um an solchen Leichtbauplatten weitere Bauelemente anbringen zu können, beispielsweise Griffe, Türbeschläge oder andere Beschläge, oder aber um zwei Leichtbauplatten miteinander verbinden zu können, müssen Befestigungselemente in die jeweiligen Leichtbauplatten eingebracht werden, wobei die Befestigungselemente dann sowohl in der oberen als auch in der unteren Decke befestigt werden sollen. Solche Befestigungselemente dienen als Befestigungspunkte, an denen die Griffe, Türbeschläge oder anderen Beschläge befestigt werden können.

Je dünner die jeweiligen Decken werden, desto anfälliger werden sie gegen mechanische Beanspruchungen und insbesondere gegen ein mechanisches Verspreizen oder Verspannen der Befestigungselemente. Es kann insbesondere vorkommen, dass die Decken bei der Verwendung herkömmlicher, mechanisch verspreizter oder verspannter Befestigungselemente im Bereich der jeweiligen Verspreizungen angehoben werden und dadurch die Anmutung der Leichtbauplatte nachteilig verändert wird oder die Decken gar beschädigt werden.

### Stand der Technik

Aus dieser Überlegung heraus sind Befestigungselemente bekannt, die mit den jeweiligen Werkstücken verklebt werden, um ein Verspreizen oder Verspannen zu vermeiden.

Aus der WO 2006/106131 A1 ist ein Verbindungseinsatz bekannt, welcher mit einem zentrischen Klebstoffzuführkanal und mit quer dazu stehenden Austrittsöffnungen versehen ist, wobei der Verbindungseinsatz mehrteilig ausgebildet ist und ein den Klebstoffzuführkanal aufweisendes Innenteil und eine in eine Bohrung eines Bauteils zumindest teilweise einsetzbare Außenhülse aufweist.

Als weiterer Stand der Technik sind die Dokumente DE 297 21 119 U1, DE 101 52 908 A1 WO 2008/046411 A1 sowie WO 2009/003459 A2 bekannt, die Befestigungselemente mit Klebstoffkugeln betreffen, die durch mechanische Energie aktiviert werden.

Als weiterer Stand der Technik ist das Dokument US 3,716,092 A1 bekannt, bei dem ein Inlet in eine Leichbauplatte eingeführt wird. Dieses Inlet ist in einem Umfangsabschnitt mit einer schmelzbaren Masse umgeben.

### Übersicht

Es ist entsprechend eine Aufgabe der vorliegenden Erfindung, ein Verfahren zum Verbinden eines Befestigungselements mit einem Werkstück, insbesondere mit einer Leichtbauplatte, anzugeben, das ein verbessertes Einbringen der Befestigungselemente ermöglicht.

Die Aufgabe wird gelöst durch ein Verfahren zum Verbinden eines Befestigungselements mit einem Werkstück, insbesondere mit einer Leichtbauplatte, wobei das Befestigungselement einen Klebstoffvorrat umfasst. Der Klebstoffvorrat ist dabei in dem Befestigungselement vorgesehen und wird durch Zufuhr von Energie freigesetzt oder innerhalb des Befestigungselements durch Zufuhr von Energie aktiviert, um das Befestigungselement mit dem Werkstück zu verbinden. Die zugeführte Energie kann in Form von Wärmeenergie, elektrischer Energie, elektromagnetischer Energie, insbesondere Laser und/oder chemischer Energie zugeführt werden. Die Form der Energiezufuhr kann dabei insbesondere von der Art und Beschaffenheit des Klebstoffvorrats in dem Befestigungselement abhängig gemacht werden.

Entsprechend wird es durch das erfindungsgemäße Verfahren ermöglicht, ein Befestigungselement schnell und exakt in eine Leichtbauplatte einzubringen und dann mittels des in dem Befestigungselement vorgesehen Klebstoffvorrats durch Zufuhr von Energie mit dieser zu verbinden. Hierdurch wird insbesondere vermieden, dass von außen ein Klebstoff, insbesondere ein Mehrkomponentenklebstoff, zugeführt werden muss, der typischerweise nur innerhalb sehr kurzer Zeiten verarbeitbar bleibt. Um das Befestigungselement mit dem Werkstück in der korrekten Orientierung zu verbinden, wird zunächst der Klebstoffvorrat, der bereits in dem Befestigungselement vorgesehen ist, durch Zufuhr von Energie freigesetzt. Danach wird das Befestigungselement in einer korrekten Orientierung in das Werkstück eingebracht.

Hierdurch kann eine exakte und schnelle Verbindung des Befestigungselements mit dem Werkstück erreicht werden. Insbesondere wird ein Verfestigen des Klebstoffes in den herkömmlicher Weise verwendeten Mischröhrchen, Zuführröhrchen oder Zuführdüsen und der damit verbundene Aufwand des Auswechselns oder Reinigens vermieden.

Durch die Aktivierung des Klebstoffvorrats innerhalb des Befestigungselements kann ein sicheres und exaktes Einsetzen des Befestigungselements in das Werkstück erreicht werden.

Wärmeenergie wird beispielsweise dafür verwendet werden, einen Klebstoff durch die Wärmeenergie zu verflüssigen. Elektrische Energie kann beispielsweise dazu verwendet werden, einen Klebstoff mittels einer Induktionsheizung zu erwärmen. Elektromagnetische Energie kann beispielsweise dazu verwendet werden, den Klebstoff mittels eines Lasers zu verflüssigen.

Chemische Energie kann in Form einer Aktivierungskomponente oder einer Reaktionskomponente zugeführt werden, die in Reaktion mit dem in dem Befestigungselement vorgesehen Klebstoffvorrat tritt.

Erfindungsgemäß wird die Energie vor dem Setzen des Befestigungselements zugeführt.

Bevorzugt ist in dem Klebstoffvorrat mindestens ein Metallbereich umfasst, welcher zur Zufuhr von Energie induktiv geheizt werden kann. Auf diese Weise ist es möglich, den Klebstoffvorrat in dem Befestigungselement zu heizen, bevor das Befestigungselement in das Werkstück eingesetzt ist. Hier kann von außen über eine Induktionsschleife Energie zugeführt werden.

Bevorzugt wird, um das Befestigungselement mit dem Werkstück zu verbinden, zumindest ein Teil des freigesetzten bzw. aktivierten Klebstoffvorrats durch in dem Befestigungselement vorgesehene Flusskanäle auf die Außenseite des Befestigungselements transportiert. Hierdurch kann eine Verteilung des in dem Befestigungselement vorgesehenen Klebstoffvorrats an die entsprechenden Kontaktstellen zwischen dem Befestigungselement und dem Werkstück erreicht werden.

Weiterhin kann durch den Transport des freigesetzten bzw. aktivierten Klebstoffvorrats durch die Flusskanäle hindurch beispielsweise eine bessere Durchmischung mehrerer Komponenten eines Mehrkomponentenklebstoffs erreicht werden. Hierdurch wird eine sichere und homogene Verklebung des Befestigungselements mit dem Werkstück erreicht. Der Transport des aktivierten bzw. freigesetzten Klebstoffvorrats durch die Flusskanäle ermöglicht weiterhin eine besonders bevorzugte Verwendung des Verfahrens mit einer Leichtbauplatte, da ein einziger Klebstoffvorrat in dem Befestigungselement an die beiden an den entgegen gesetzten Enden des Befestigungselements vorgesehenen Kontaktstellen des Befestigungselements mit den Decken der Leichtbauplatte transportiert werden kann. Hierdurch wird eine sichere und effiziente Anbringung und Verbindung des Befestigungselements mit dem Werkstück erreicht.

Bevorzugt wird der freigesetzte bzw. aktivierte Klebstoffvorrat durch die Zufuhr der Energie, insbesondere durch Zufuhr der mechanischen Energie, transportiert. Auf diese Weise kann erreicht werden, dass die Energie, die zur Aktivierung bzw. Freisetzung des Klebstoffvorrats verwendet wird, gleichzeitig auch zum Transport des freigesetzten bzw. aktivierten Klebstoffvorrats dient. Auf diese Weise kann ein effizientes, schnelles und exaktes Einsetzen des Befestigungselements in das Werkstück erreicht werden.

Das Befestigungselement ist typischerweise einteilig ausgebildet. In einer bevorzugten Ausführungsform ist das Befestigungselement mindestens zweiteilig ausgebildet.

Bevorzugt weist das Befestigungselement zumindest einen durch einen Hauptkörper des Befestigungselements umschlossenen Hohlraum zur Aufnahme des Klebstoffvorrats auf, und das Volumen des Hohlraums kann mittels eines in dem Hohlraum aufgenommenen Kolbens durch die Zufuhr mechanischer Energie verringert werden.

Bevorzugt umfasst der Klebstoffvorrat eine erste Komponente und zur Freisetzung bzw. Aktivierung des Klebstoffvorrats wird mindestens eine zweite Komponente in das Befestigungselement zugeführt. Dabei kann die zweite Komponente bzw. der Reaktionsstoff durch eine Bohrung in dem Kolben hindurch zum Klebstoffvorrat zugeführt werden. Hierdurch kann erreicht werden, dass eine erste Komponente des Klebstoffvorrats bereits in dem Befestigungselement vorgesehen ist und nur eine zweite Komponente zugeführt werden muss. Es wird dadurch vermieden, dass eine bereits gemischte Zweikomponentenklebstoffmischung beim Zuführen die herkömmlich vorgesehenen Zuführröhrchen, Mischröhrchen oder andere Teile einer Klebstoffzuführvorrichtung verstopft.

Durch die Zufuhr der zweiten Klebstoffkomponente bzw. des Reaktionsstoffs kann Wärme freigesetzt werden, die durch Expansion des Klebstoffs dazu dient, den Klebstoff an die vorgesehenen Stellen zu transportieren, insbesondere über Flusskanäle. Eine Durchmischung und Aktivierung des Zweikomponentenklebers findet dabei innerhalb des Befestigungselements statt.

Zur Freisetzung bzw. Aktivierung des Klebstoffvorrats kann auch eine weitere chemische Komponente zugeführt werden, die die entsprechende Freisetzung bzw. Aktivierung vornimmt.

Zum Freisetzen bzw. Aktivieren des Klebstoffvorrats wird das Befestigungselement bevorzugt in eine Induktionsschleife geführt. Das Befestigungselement wird dabei vor dem Einsetzen in das Werkstück durch eine Induktionsschleife geführt, so dass der Klebstoffvorrat in dem Befestigungselement bereits aktiviert ist, wenn das Befestigungselement in das Werkstück eingesetzt wird.

Bevorzugt können gemäß dem Verfahren mindestens zwei Befestigungselemente gleichzeitig in das Werkstück eingesetzt werden. Hierdurch wird eine besonders effiziente Einbringung der Befestigungselemente erreicht. Insbesondere ist ein Werkzeug zum Einbringen der Befestigungselemente so ausgestaltet, dass mindestens zwei Befestigungselemente gleichzeitig eingesetzt werden können.

Bevorzugt wird das Einsetzen des Befestigungselements bzw. der Befestigungselemente in das Werkstück sowie das Freisetzen bzw. Aktivieren des Klebstoffvorrats automatisiert durchgeführt. Dies ist besonders mit einer entsprechenden Vorrichtung, die innerhalb einer entsprechenden Produktionsstraße vorgesehen ist, möglich. Bevorzugt wird das Befestigungselement in ein stationäres Werkstück, in ein auf einer getakteten Umgebung bewegtes Werkstück oder in ein mittels Durchlauftechnik bewegtes Werkstück eingebracht.

Bevorzugt sind Mittel zum gleichzeitigen Einbringen von mindestens zwei Befestigungselementen vorgesehen. Bevorzugt sind Mittel zum automatisierten Einsetzen des Befestigungselements in das Werkstück sowie Mittel zum automatisierten Zuführen von Energie vorgesehen.

## Patentansprüche

1. Verfahren zum Verbinden eines Befestigungselements mit einem Werkstück, insbesondere mit einer Leichtbauplatte, wobei ein Klebstoffvorrat in dem Befestigungselement vorgesehen ist und der Klebstoffvorrat durch Zufuhr von Energie freigesetzt wird oder der Klebstoffvorrat innerhalb des Befestigungselements durch Zufuhr von Energie aktiviert wird, um das Befestigungselement mit dem Werkstück zu verbinden, wobei die Energie in Form von Wärmeenergie, elektrischer Energie, elektromagnetischer Energie und/oder chemischer Energie zugeführt wird, **dadurch gekennzeichnet, dass** die Energie vor dem Einsetzen des Befestigungselements in das Werkstück zugeführt wird.

2. Verfahren gemäß einem der vorstehenden Ansprüche, wobei der Klebstoffvorrat mindestens einen Metallbereich umfasst, welcher zur Zufuhr von Energie induktiv geheizt wird.

3. Verfahren gemäß einem der vorstehenden Ansprüche, wobei, um das Befestigungselement mit dem Werkstück zu verbinden, zumindest ein Teil des freigesetzten bzw. aktivierten Klebstoffvorrats durch in dem Befestigungselement vorgesehene Flusskanäle auf die Außenseite des Befestigungselements transportiert wird, wobei insbesondere der Klebstoff mittels der Zufuhr der Energie durch die Flusskanäle transportiert wird, insbesondere durch die Zufuhr mechanischer Energie.

4. Verfahren gemäß einem der vorstehenden Ansprüche, wobei das Befestigungselement mindestens zweiteilig ist, wobei insbesondere das Befestigungselement zumindest einen durch einen Hauptkörper des Befestigungselements umschlossenen Hohlraum zur Aufnahme des Klebstoffvorrats aufweist und wobei das Volumen des Hohlraums mittels eines in dem Hohlraum aufgenommenen Kolbens durch die Zufuhr mechanischer Energie verringert wird.

5. Verfahren gemäß einem der vorstehenden Ansprüche, wobei der Klebstoffvorrat eine erste Komponente umfasst und zur Freisetzung bzw. Aktivierung des Klebstoffvorrats mindestens eine zweite Komponente bzw. ein Reaktionsstoff in das Befestigungselement zugeführt wird, wobei insbesondere die zweite Komponente bzw. ein Reaktionsstoff durch eine Bohrung in dem Kolben zum Klebstoffvorrat zugeführt wird, und/oder wobei insbesondere der Klebstoffvorrat eine Komponente eines Zweikomponentenklebers ist und die zweite Komponente des Zweikomponentenklebers zur Freisetzung bzw. Aktivierung in das Befestigungselement zugeführt wird.

6. Verfahren gemäß einem der vorstehenden Ansprüche, wobei zur Freisetzung bzw. Aktivierung des Klebstoffvorrats eine chemische Komponente zugeführt wird.

7. Verfahren gemäß einem der vorstehenden Ansprüche, wobei das Befestigungselement zum Freisetzen bzw. Aktivieren des Klebstoffvorrats in eine Induktionsschleife geführt wird, wobei insbesondere das Befestigungselement vor dem Einsetzen in das Werkstück durch eine Induktionsschleife geführt wird.

8. Verfahren gemäß einem der vorstehenden Ansprüche, wobei mindestens zwei Befestigungselemente gleichzeitig in das Werkstück eingesetzt werden.

9. Verfahren gemäß einem der vorstehenden Ansprüche, wobei das Einsetzen des Befestigungselements in das Werkstück sowie das Freisetzen bzw. Aktivieren des Klebstoffvorrats automatisiert durchgeführt wird.

10. Verfahren gemäß einem der vorstehenden Ansprüche, wobei das Befestigungselement in ein stationäres Werkstück, in ein getaktet bewegtes Werkstück oder in ein mittels Durchlauftechnik bewegtes Werkstück eingebracht wird.

## Claims

1. Method for joining an attachment element to a workpiece, in particular to a light building board, wherein an adhesive store is provided in the attachment element and the adhesive store is released by supply of energy or the adhesive store is activated within the attachment element by supply of energy to join the attachment element to the workpiece, wherein the energy is supplied in the form of heat energy, electrical energy, electromagnetic energy and/or chemical energy, **characterised in that** the energy is supplied before insertion of the attachment element into the workpiece.

2. Method according to one of the preceding claims, wherein the adhesive store comprises at least one metal region which is heated inductively to supply energy.

3. Method according to one of the preceding claims, wherein, in order to join the attachment element to the workpiece, at least some of the released or activated adhesive store is transported to the outer side of the attachment element through flow channels provided in the attachment element, wherein in particular the adhesive is transported through the flow channels by means of the supply of energy, in particular by the supply of mechanical energy.

4. Method according to one of the preceding claims, wherein the attachment element has at least two parts, wherein in particular the attachment element has at least one cavity surrounded by a main body of the attachment element to receive the adhesive store and wherein the volume of the cavity is reduced by the supply of mechanical energy by means of a piston accommodated in the cavity.

5. Method according to one of the preceding claims, wherein the adhesive store comprises a first component and to release or activate the adhesive store, at least one second component or a reaction material is supplied to the attachment element, wherein in particular the second component or a reaction material is supplied to the adhesive store through a bore in the piston, and/or wherein in particular the adhesive store is a component of a two-component adhesive and the second component of the two-component adhesive is supplied to the attachment element for release or activation.

6. Method according to one of the preceding claims, wherein a chemical component is supplied for release or activation of the adhesive store.

7. Method according to one of the preceding claims, wherein the attachment element is guided into an induction loop for release or activation of the adhesive store, wherein in particular the attachment element is guided through an induction loop before insertion into the workpiece.

8. Method according to one of the preceding claims, wherein at least two attachment elements are inserted into the workpiece at the same time.

9. Method according to one of the preceding claims, wherein the insertion of the attachment element into the workpiece and the release or activation of the adhesive store is carried out in automated manner.

10. Method according to one of the preceding claims, wherein the attachment element is introduced into a stationary workpiece, into a workpiece moved in cycles or into a workpiece moved by means of passage technology.

## Revendications

1. Procédé d'assemblage d'un élément de fixation avec une pièce, en particulier avec un panneau de construction léger, où une réserve d'adhésif est prévue dans l'élément de fixation et la réserve d'adhésif est libérée par apport d'énergie, ou bien la réserve d'adhésif est activée par apport d'énergie à l'intérieur de l'élément de fixation pour assembler l'élément de fixation à la pièce, l'énergie étant appliquée sous forme d'énergie thermique, d'énergie électrique, d'énergie électromagnétique et/ou d'énergie chimique, **caractérisé en ce que** l'énergie est appliquée dans la pièce avant la mise en place de l'élément de fixation.

2. Procédé selon l'une des revendications précédentes, où la réserve d'adhésif comporte au moins une zone métallique, laquelle est chauffée par induction pour l'application d'énergie.

3. Procédé selon l'une des revendications précédentes, où, pour assembler l'élément de fixation à la pièce, au moins une partie de la réserve d'adhésif libérée ou activée est transportée vers la face extérieure de l'élément de fixation par des canaux d'écoulement prévus dans l'élément de fixation, l'adhésif étant notamment transporté par apport d'énergie dans les canaux d'écoulement, en particulier par apport d'énergie mécanique.

4. Procédé selon l'une des revendications précédentes, où l'élément de fixation est au moins constitué de deux pièces, l'élément de fixation comportant en particulier au moins une cavité entourée par un corps principal de l'élément de fixation pour la réception de la réserve d'adhésif, et le volume de la cavité étant réduit par l'apport d'énergie mécanique, au moyen d'un piston logé dans la cavité.

5. Procédé selon l'une des revendications précédentes, où la réserve d'adhésif comprend un premier composant et où au moins un deuxième composant ou une substance réactive est appliquée dans l'élément de fixation pour la libération ou l'activation de la réserve d'adhésif, le deuxième composant ou une substance réactive étant en particulier conduits vers la réserve d'adhésif par un alésage du piston, et/ou la réserve d'adhésif étant en particulier un composant d'une colle à deux composants, et le deuxième composant de la colle à deux composants étant appliqué dans l'élément de fixation pour libération ou activation.

6. Procédé selon l'une des revendications précédentes, où un composant chimique est appliqué pour la libération ou l'activation de la réserve d'adhésif.

7. Procédé selon l'une des revendications précédentes, où l'élément de fixation est conduit dans une boucle d'induction pour la libération ou l'activation de la réserve d'adhésif, l'élément de fixation étant en particulier conduit par une boucle d'induction avant la mise en place dans la pièce.

8. Procédé selon l'une des revendications précédentes, où au moins deux éléments de fixation sont simultanément mis en place dans la pièce.

9. Procédé selon l'une des revendications précédentes, où la mise en place de l'élément de fixation dans la pièce ainsi que la libération ou l'activation de la réserve d'adhésif sont exécutées automatiquement.

10. Procédé selon l'une des revendications précédentes, où l'élément de fixation est mis en place dans une pièce fixe, dans une pièce déplacée en cadence ou dans une pièce déplacée par passage continu.
